# EUROPEAN PATENT SPECIFICATION

(11) **EP 1 879 187 B1**
(45) Date of publication and mention of the grant of the patent: **20.07.2011**
(21) Application number: 07112185.9
(22) Date of filing: 13.10.2004
(51) Int. Cl.: G11B 27/034, G11B 27/10, G11B 27/32, H04N 5/783, H04N 9/804, H04N 5/85, H04N 9/82

(54) **Recording medium having a data structure for managing reproduction of data streams recorded thereon and recording and reporducing methods and apparatuses**
Aufzeichnungsmedium mit Datenstruktur zur Verwaltung der Wiedergabe von darauf aufgezeichneten Datenströmen sowie Verfahren und Vorrichtungen zur Aufzeichnung und Wiedergabe
Support d'enregistrement ayant une structure de données pour gérer la reproduction des flux de données enregistrées dessus et procédé et appareils d'enregistrement et de reproduction

(30) Priority: 13.01.2004 KR 20040002391
(43) Date of publication of application: 16.01.2008
(62) Divisional of application: 04793478.1
(73) Proprietor: LG Electronics Inc., Seoul 150-721 (KR)
(72) Inventor: Seo, Kang Soo, Gyeonggi-do 104-1504 (KR); Kim, Byung Jin, Gyeonggi-do 111-204 (KR); Yoo, Jea Yong, Seoul 205-808 (KR)
(74) Representative: Vossius & Partner

(56) References cited:
- EP-A- 0 676 755
- EP-A- 0 737 980
- WO-A-2004/001748
- US-A- 5 881 203
- US-A1- 2002 191 963
- US-A1- 2003 161 615

## Description

### Technical Field

The present invention relates to high density recording media such as read-only blu-ray discs (BD-ROM) and methods and apparatuses associated therewith.

### Background Art

Optical discs are widely used as an optical recording medium. Presently, of the optical discs, a new high density optical recording medium (HD-DVD), such as the Blu-ray Disc (hereafter called as "BD"), is under development, for writing and storing high definition video and audio data.

Currently, global standard technical specifications of the Blu-ray Disc (BD), a next generation HD-DVD technology, are under development. BDs are viewed as a next generation optical recording solution that can store significantly larger amounts of data than present DVDs.

In relation to this, optical reproducing apparatuses for Blu-ray Disc (BD) standards are under development. However, because the Blu-ray Disc (BD) standards are not complete yet, there has been difficulty in developing a complete optical reproducing apparatus.

In a BD, main data such as AV data, and various kinds of associated supplemental data for convenience of a user, such as subtitle information are provided. Furthermore, the BD provides management information for reproducing the main data and the supplementary data from the optical disc.

However, in the present Blu-ray Disc (BD) standards, because consolidated standards of the supplementary data, particularly the subtitle information are not complete yet, there are many restrictions on the development of a Blu-ray Disc (BD) optical reproducing apparatus, which causes problems in reproducing supplemental data such as subtitle data and providing it to the user.

In US-A-2003/161615 a new navigation function is added to a legacy DVD-Video, wherein an ENAV engine playing back the ENAV contents of the DVD disc controls playback of the ENAV contents and that of the video contents in combination, connection and/or synchronism with each other according to the played-back contents of the ENAV contents.

US-A-5,881,203 describes a data recording method in which video data and plural channels of language data are divided into packets as units, and video data and plural channels of language data are recorded on a record medium along with the control information containing a flag designating a reproducing channel of the language data matched to a reproducing pattern of the video data.

### Disclosure of Invention

A recording medium includes a data structure for managing reproduction of data streams recorded thereon.

The recording medium stores a playlist that includes a streams table, a playitem and a sub-playltem. The playitem includes information for managing reproduction of a main data stream of data packets, and the sub-playitem includes information for managing reproduction of at least one supplemental data stream of data packets. The streams table provides a list of packet identifiers in the data packets of the main and supplemental data streams.

The streams table may also provide stream attributes for each main and supplemental data stream for which the streams table lists a packet identifier.

The recording medium stores a streams table defining a list of a main data stream and at least one supplemental data stream for selection by a reproducing apparatus during presentation of a playitem and sub-playitem. The playitem provides information for reproducing the main data stream and the sub-playitem provides information for reproducing the supplemental data stream.

The streams table, for each main and supplemental data stream, provides a packet identifier of the packets forming the data stream.

The streams table, for each main and supplemental data stream, provides stream attributes.

According to an aspect of the invention the playlist further includes another sub-playitem including information for managing another supplemental data stream, the another supplemental data stream not being divided into data packets; and the streams table providing an identifier of the another supplemental data stream.

According to a further aspect the main data stream is at least a video data stream and the supplemental data stream is a subtitle data stream.

According to a further aspect a management area stores a playlist and a data area stores the main and supplemental data streams.

According to a further aspect the playitem provides reproduction start and end times for reproducing the main data stream.

According to a further aspect the sub-playitem provides reproduction start and end time for reproducing the supplemental data stream.

According to a further aspect the sub-playitem provides reproduction start and end time for reproducing the supplemental data stream.

According to an aspect of the invention the streams table lists the main data stream and the supplemental data stream by providing packet identifiers for data packets forming the main data stream and forming the supplemental data stream.

According to a further aspect the management area stores the streams table in a playlist.

According to a further aspect the playlist includes the playitem and the sub-playitem.

The present invention provides apparatuses and methods for recording and reproducing the data structure according to the present invention, as defined according to the claims.
According to an aspect of the invention a method of reproducing a data structure for managing reproduction of data streams from a recording medium, comprises:
reproducing a streams table from a playlist recorded on the recording medium, the playlist including the streams table, a playitem and a sub-playitem, the playitem including information for managing reproduction of a main data stream of data packets, the sub-playitem including information for managing reproduction of at least one supplemental data stream of data packets, and the stream table providing a list of packet identifiers in the data packets of the main and supplemental data streams.

According to another aspect of the invention a method of recording a data structure for managing reproduction of data streams on a recording medium, comprises:
recording a playlist on the recording medium, the playlist including a streams table, a playitem and a sub-playitem, the playitem including information for managing reproduction of a main data stream of data packets, the sub-playitem including information for managing reproduction of at least one supplemental data stream of data packets, and the streams table providing a list of packet identifiers in the data packets of the main and supplemental data streams.

According to an aspect of the present invention an apparatus for reproducing a data structure for managing reproduction of data streams from a recording medium, comprises:
a driver for driving an optical reproducing device to reproduce data recorded on the recording medium;
a controller for controlling the driver to reproduce a streams table from a playlist recorded on the recording medium, the playlist including the streams table, a playitem and a sub-playitem, the playitem including information for managing reproduction of a main data stream of data packets, the sub-playitem including information for managing reproduction of at least one supplemental data stream of data packets, and the streams table providing a list of packet identifiers in the data packets of the main and supplemental data streams.

According to another aspect of the invention an apparatus for recording a data structure for managing reproduction of data streams on a recording medium, comprises:
a driver for driving an optical recording device to record data on the recording medium;
a controller for controlling the driver to record a playlist on the recording medium, the playlist including a streams table, a playitem and a sub-playitem, the playitem including information for managing reproduction of a main data stream of data packets, the sub-playitem including information for managing reproduction of at least one supplemental data stream of data packets, and the streams table providing a list of packet identifiers in the data packets of the main and supplemental data streams.

### Brief Description of the Drawings

The accompanying drawings, which are included to provide a further understanding of the invention and are incorporated in and constitute a part of this application, illustrate embodiment(s) of the invention and together with the description serve to explain the principle of the invention.

In the drawings;
FIG. 1 illustrates a file structure for managing data on a disc in accordance with an exemplary embodiment of the present invention;
FIG. 2 schematically illustrates a disc volume for storing the file structure of FIG. 1 in accordance with an embodiment of the present invention;
FIGS. 3A and 3B illustrate diagrams each showing an exemplary case when subtitle data (as an example of supplemental data) and main data are provided to a screen at the same time;
FIGS. 4A and 4B illustrate first embodiments of the data structure for managing reproduction of the data streams recorded on the recording medium;
FIGS. 5A and 5B illustrate second embodiments of the data structure for managing reproduction of the data streams recorded on the recording medium;
FIGS. 6A and 6B illustrate third embodiments of the data structure for managing reproduction of the data streams recorded on the recording medium;
FIG. 7A illustrates the Playable_PID_entries() data structure for a playitem and a sub-playitem according to an embodiment of the present invention in detail;
FIGS. 7B and 7C illustrate detailed structures of the Playable_PID_entries() and the Virtual_Playable_PID_entries() data structures according to embodiments of the present invention;
FIG. 7D illustrates a SubPlayItem syntax in a playlist file of the present invention; and
FIG. 8 is a detailed block diagram of an optical recording and reproducing apparatus according to the present invention

### Best mode for Carrying Out the Invention

Reference will now be made in detail to the exemplary embodiments of the present invention, examples of which are illustrated in the accompanying drawings. While terms used in the present invention are possibly selected from currently well-known terms, terms are arbitrarily chosen by the applicant in some cases and their meanings are explained in detail in the following description. Hence, the present invention should be understood with the meanings of the corresponding terms chosen by the applicant instead of the simple names of the terms.

In relation to the above, main data in the present invention means, for example, title information on an optical disc, and may include video and audio data an author provides to a user, in general recorded in MPEG2 format, and may also be called a main AV stream.

Supplementary or supplemental data means data related to the main data provided to a user for convenience of reproduction such as subtitle information, menu information, audio information for browsable slide show, etc. The supplemental information may be recorded in the MPEG2 format and multiplexed in a main AV stream, or recorded in the MPEG2 format or another format and stored as a stream file independent from the main AV stream.

In the present invention, the subtitle data means a kind of caption information, displayed on a screen when the user selects the subtitle for reproduction with the main data. Therefore, the subtitle can be written in various formats, such as MPEG2 transport (TS) packets, bit-map form of binary format, text data, etc., and the subtitle recorded as text data is called a text subtitle.

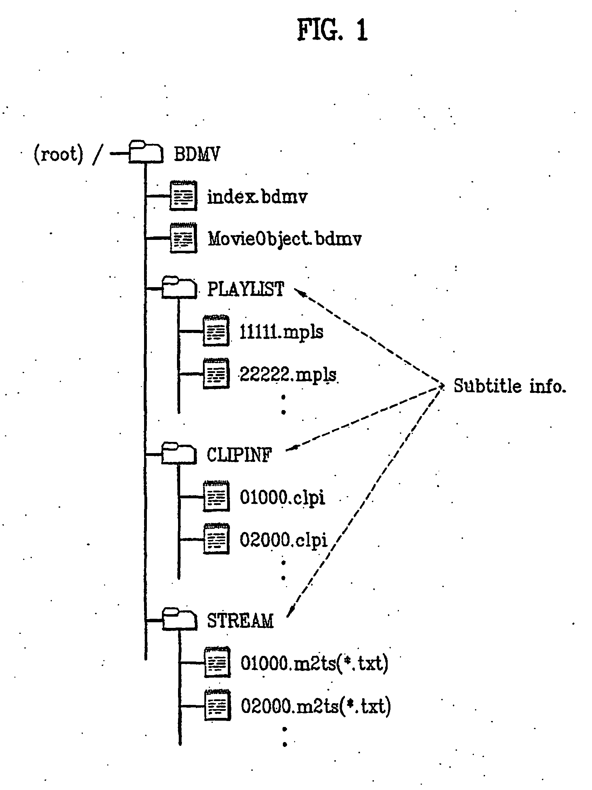

FIG. 1 illustrates a file structure for managing data on a disc in accordance with an exemplary embodiment of the present invention. As shown, at least one BD directory BDMV is included under a root directory. The BD directory includes an index file index.bdmv and an object file MovieObject.bdmv as general files (upper files) for securing a user's interactivity, and includes three directories: a playlist directory PLAYLIST, a clipinfo directory CLIPINF, and a stream directory STREAM.

The stream directory STREAM has files on a main video and audio stream (referred to as main AV stream) recorded in particular formats on the disc, and a stream related to a supplementary data, such as a subtitle (called as a subtitle stream). The main AV stream and the supplemental data streams are recorded in MPEG 2 transport packets, and an expansion name of such a file will generally be "* .m2ts". The A/V stream includes source packets of video and audio data. A source packet of video data includes a header and a transport packet. A source packet includes a source packet number, which is generally a sequentially assigned number that serves as an address for accessing the source packet According to the MPEG 2 standard, the transport packets include a packet identifier (PID). The PID identifies the sequence of transport packets to which a transport packet belongs. Each transport packet in the sequence will have the same PID.

Furthermore, the expansion name for the supplemental data may be different than "*.m2ts". For example, a subtitle stream will be, for example, "*.txt" if the subtitle stream is recorded in a text data format. If the subtitle stream is not recorded in the MPEG2 format, then a file expansion name proper to the format used may provided as the file expansion name. A stream file is sometimes called as a clip stream file in the BD standards, and in the present invention, the subtitle data will exist in a separate file form, e.g., as the subtitle stream file *,txt, separate from the AV stream.

The clipinfo directory CLIPINF has clipinfo files, for example 01000.clpi and 02000.clpi, that have one-to-one correspondence with the respective stream files *.m2ts, and *.txt. Particularly, the cliphifo file *.clpi has attribute information and timing information of a relevant stream file. The timing information includes information on mapping a presentation time stamp (PTS) of data in the stream file to a source packet number of a source packet in the stream file. Typically this map is referred to as an entry point map.

In the BD standard, the AV stream *.m2ts, *.txt files, or etc. and the associated clipinfo file *.clpi are called a "clip", collectively. Accordingly, the file 01000.clpi in the clipinfo directory CLIPNF has attribute information and timing information on the file 01000.m2ts in the stream directory, and the files 01000.clpi and 01000.m2ts form a clip.

The playlist directory PLAYLIST has playlist files *.mpls, each having at least one playitem designating a playing interval of a particular clip. Therefore, the playitem has information on a play starting time In-Time and play end time Out-Time of a particular clip desired to play, i.e., designated by a clip name Clip_Information_File in the playitem. The playlist file *.mpls is basic play file information for playing a desired clip by providing at least one playitem. Moreover, the playlist file *.mpls is provided with a sub-playitem as necessary. The present invention suggests managing the supplementary data inclusive of the subtitle using the sub-playitem, of which detailed description will be given, later.

In the BD directory BDMV, there are an index file index.bdmv and an object file MovieObjeot.bdmv as general files for securing a user's interactivity. The index file index.bdmv has an index table index Table providing menu information and title information Title the user can select. The MovieObject.bdmv provides navigation commands for, for example, executing a playlist, and may be called from a selection made in the index table.

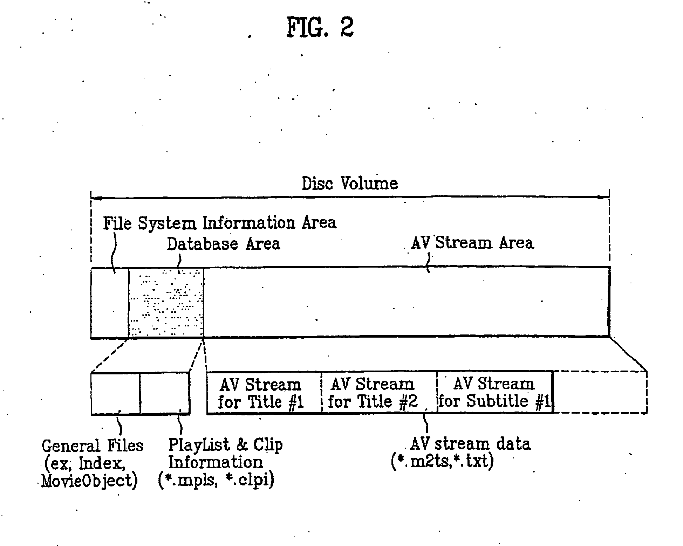

As shown in FIG. 2, the disc volume of a BD-ROM is organized into a file system information area, a database area, and an A/V stream area. The file system information area stores system information for managing the disc. The database area includes a general files area and a playlist and clip information area. The general files area stores general files such as the index.bdmv file and the MovieObject.bdmv file. The playlist and clip information area stores the PLAYLIST directory and the CLIPINF directory. The main data and the supplementary data, such as audio/video/graphic, recorded thereon are stored as the MPBG2 transport stream formatted clip files (*.m2ts) in the A/V stream area. According to this, the reproducing apparatus determines the main data, and the supplementary data desired to reproduce, and a reproduction type, by using file information in the data base area Database Area.

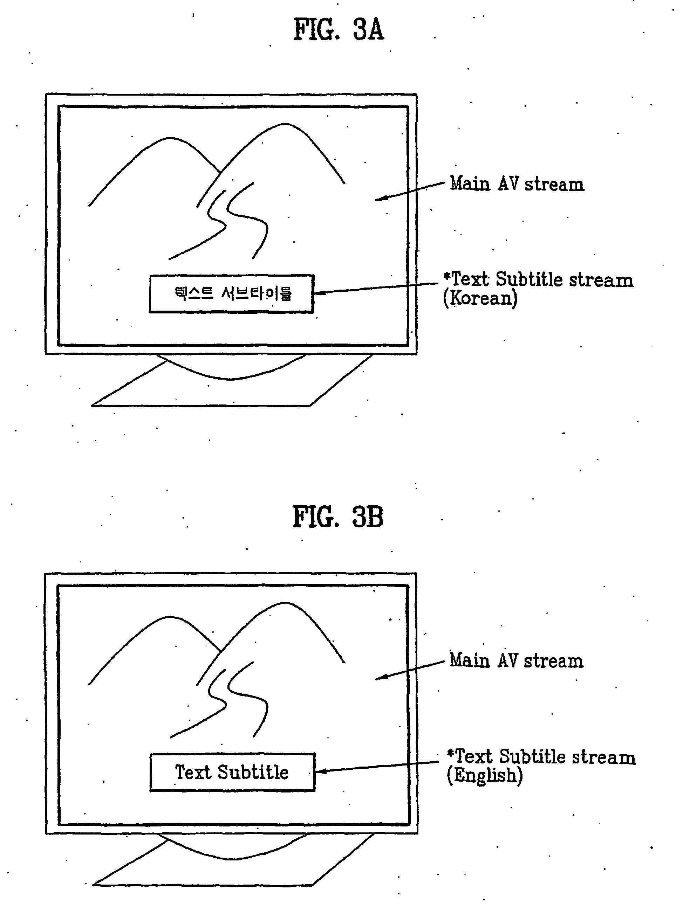

FIGS. 3A and 3B illustrate diagrams each showing an exemplary case when subtitle data (as an example of supplemental data) and main data are provided to a screen at the same time. FIG. 3A illustrates a diagram of a case where the text subtitle is in Korean, and FIG. 3B illustrates a diagram of a case where the text subtitle is in English.

In relation to above, the present invention suggests to provide a plurality of subtitles as a subtitle stream file independent from a main data (main AV stream file). In one case, the plurality of subtitles form independent subtitle stream files respectively, and in another case the plurality of subtitles are united into one subtitle stream file.

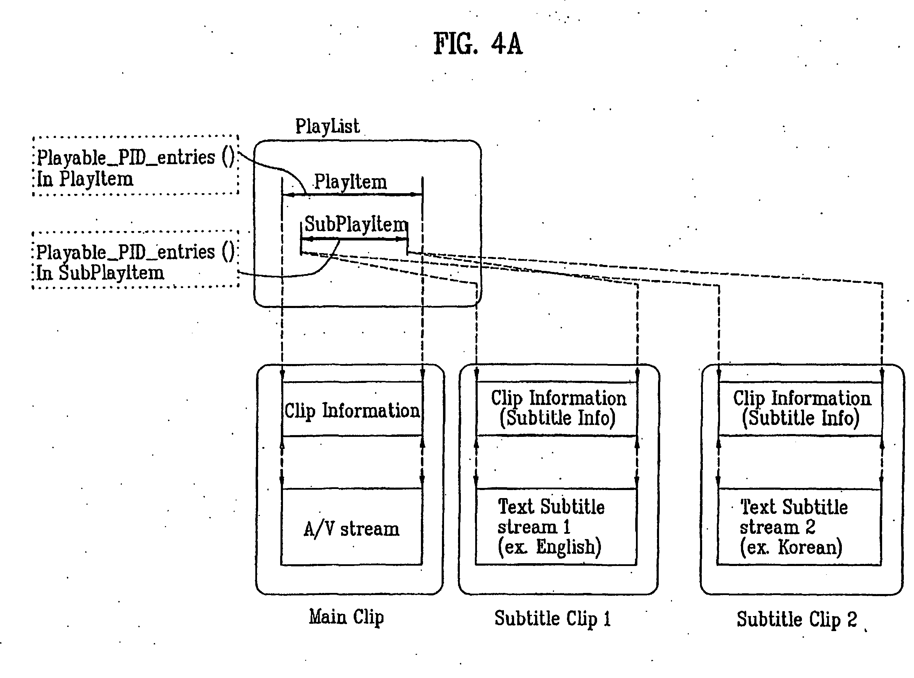

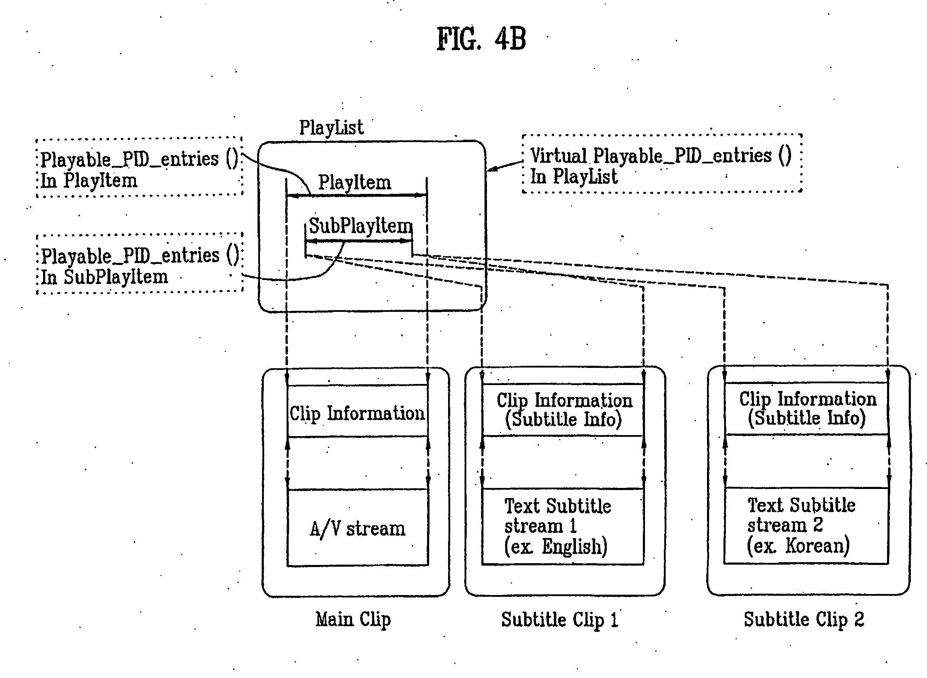

FIGS. 4A and 4B illustrate first embodiments of the data structure for managing reproduction of the data streams recorded on the recording medium. Here, the subtitle data (as an example of supplemental data) linked with main data, includes a plurality of subtitles stored as independent subtitle stream files, and reproduction of the plurality of stream files are managed using one sub-playitem SubPlayItem.

For an example, FIGS. 4A and 4B illustrate a playitem PlayItem in the playlist PlayList includes reproduction managing information for reproducing the main data, and the sub-playitem SubPlayItem includes reproduction managing information for reproducing the subtitle data. More specifically, subtitle stream files Subtitle Clip 1 and 2 for two subtitles in the languages of Korean and English, respectively are reproduced linked with one sub-playitem SubPlayItem in the playlist PlayList.

As further shown, there is a Playable_PID_entries() data structure for providing reproducible main data and subtitle information to the user as reproduction managing information in the playitem PlayItem for the main data, and in the sub-play item SubPlayItem for the subtitle data. FIG. 4B further illustrates that the playlist PlayList may include the data structure Virtual_Playable_PID__entries() for managing reproduction of both the main and subtitle data.

Particularly, in the case of FIG. 4B, all cases are possible, in which the Playable_PID_entries() is provided to the playitem PlayItem and the sub-playitem SubPlayItem and the Virtual_Playable_PID_entries() is provided to the common information area in the playlist. PlayList, or the Playable_PID_entries() is provided to the playitem PlayItem only for the main data, and the Virtual_Playable_PID _entries() including subtitle reproduction managing information in the common information area is provided in the playlist PlayList.

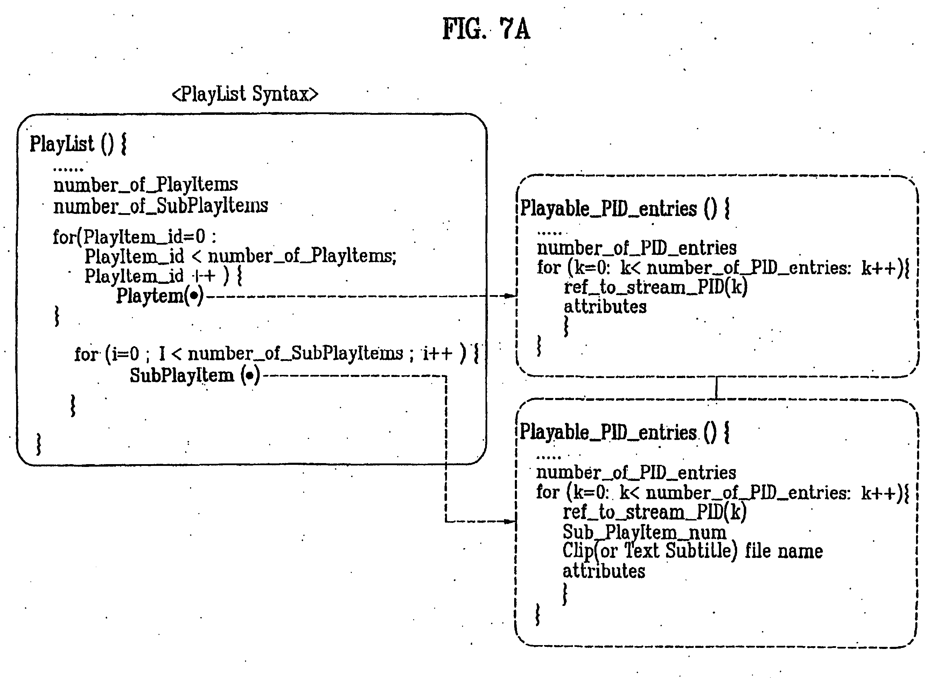

In relation to above, details of the data structures Playable_PID_entries () and the Virtual_Playable_PID_entries() will be described in detail below with respect to FIGS. 7A-7D.

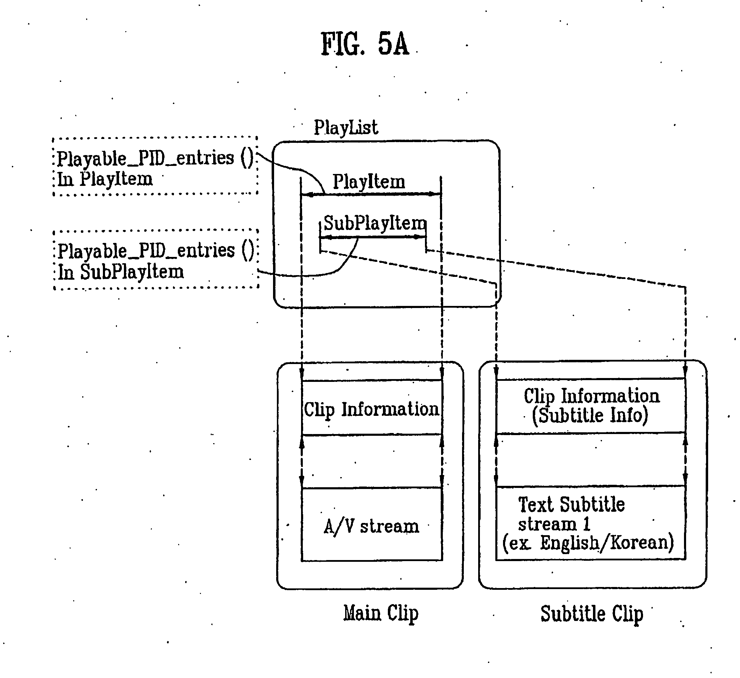

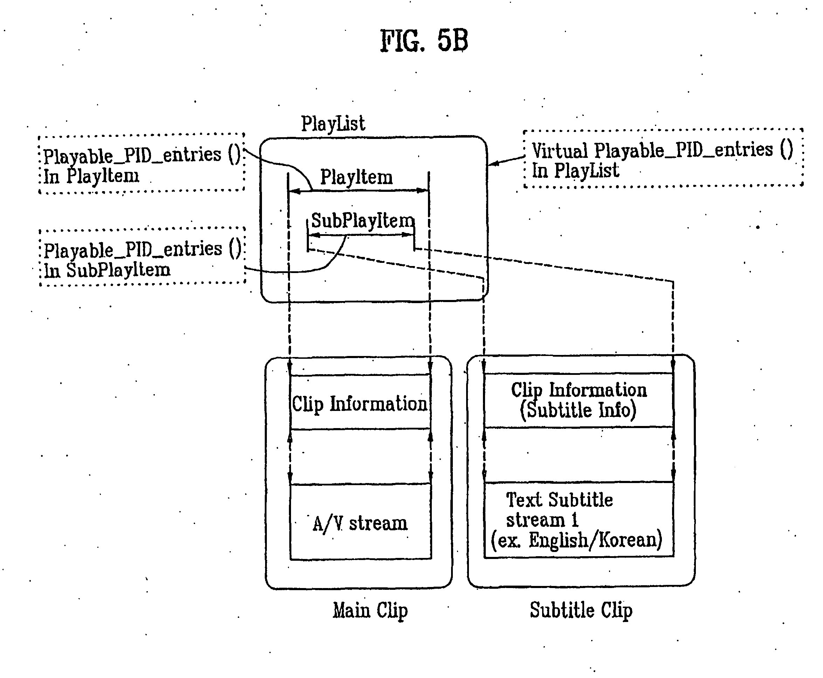

FIGS. 5A and 5B illustrate second embodiments of the data structure for managing reproduction of the data streams recorded on the recording medium. Here, the subtitle (as an example of supplemental data) linked with the main data and forming a plurality of subtitles is stored as one subtitle stream file, and reproduction of the subtitle stream file is managed using one sub-playitem SubPlayItem.

For example, in a case where two subtitles are united to form one subtitle stream file Subtitle Clip, and one subtitle file supports two language subtitles, the united subtitle stream file Subtitle Clip is reproduced linked with the sub-playitem SubPlayItem in the playlist PlayList. Reproduction managing information for managing this is recorded in the sub-playitem SubPlayItem, or playlist PlayList,

According to this, the playitem PlayItem in the playlist PlayList includes reproduction managing information for reproducing the main data, and the sub-playitem SubPlayItem includes.reproduction managing information for reproducing the subtitle. Also, the Playable_PID_entries() data structure is provided in the playitem PlayItem in relation to the main data and in the sub-playitem SubPlayItem in relation to the subtitle as shown in FIG. 5A, and/or the Virtual_Playable_PID_enirles() data structure, which assists in managing reproduction of the main data and the subtitle data, is provided in the playlist PlayList as shown in FIG. 5B.

Particularly, like FIG. 4B, in the case of FIG. 5B, all cases are possible, in which the Playable_PID_entries() is provided to the playitem PlayItem and the sub-playitem SubPlayItem and the Virtual_Playable_PID_entries() is provided to the common information area in the playlist PlayList, or the Playable _PID_entries() is provided to the playitem Playltem only for the main data and the Virtaal_playable_PID_entries() including subtitle reproduction managing information is provided in the common information area of the playlist PlayList.

In relation to above, details of the data structures Playable_PID_entries() and the Virtual_Playable_PID_entries() will be described in detail below with respect to FIGS. 7A-7D.

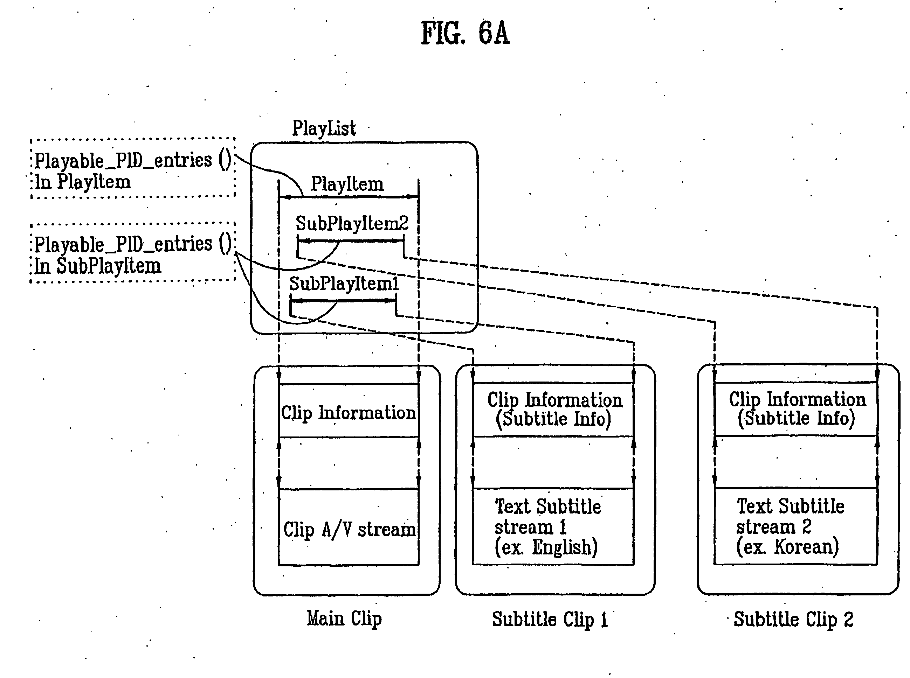

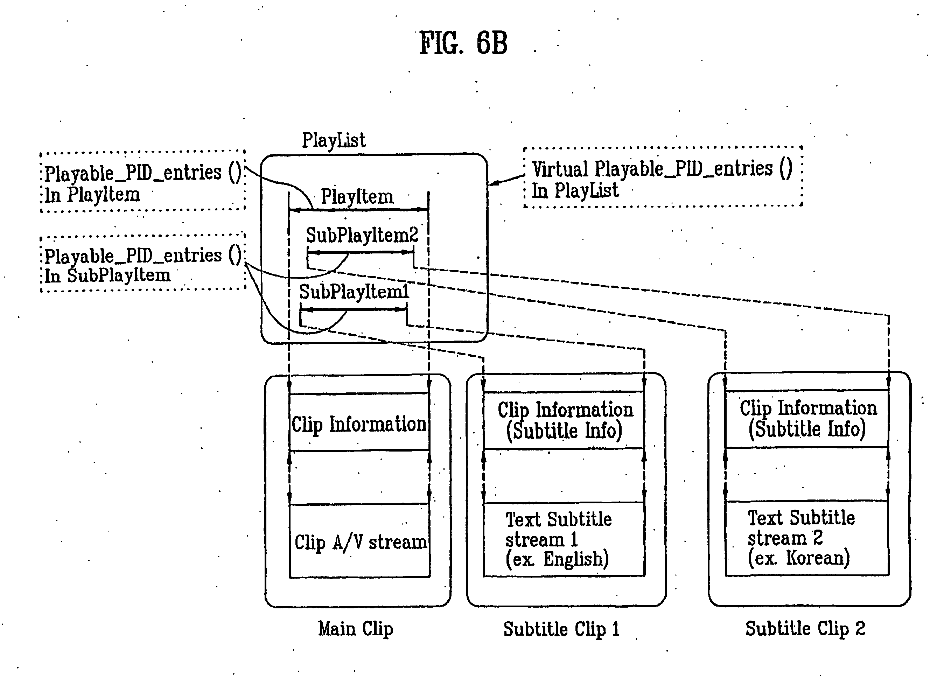

FIGS. 6A and 6B illustrate third embodiments of the data structure for managing reproduction of the data streams recorded on the recording medium. Here, the subtitle data (as an example of supplemental data) linked with a main data for a plurality of subtitles is stored as independent subtitle stream files respectively, and reproduction of the subtitle stream files is managed using corresponding sub-playitems.

For example, FIGS. 6A and 6B illustrate a playitem PlayItem in the playlist PlayList includes reproduction managing information for reproducing the main data, and the sub-playitems SubPlayItem 1 and SubPlayItem 2 include reproduction managing information for reproducing the subtitle stream files Subtitle Clip 1 and 2, respectively, for two subtitles in the languages of Korean and English, respectively.

As further shown, there is a Playable_PID_entries() data structure for providing reproducible main data and subtitle information to the user as reproduction managing information in the playitem PlayItem for the main data, and in the sub-play items SubPlayIteml and SubPlayItem 2 for the respective subtitle data. FIG. 6B further illustrates that the playlist PlayList may include the data structure Virtual_Playable_PID_enmes() for managing reproduction of both the main and subtitle data.

Particularly, in the case of FIG. 6B, all cases are possible, in which the Playable_PID_entries() is provided to the playitem PlayItem and the sub-playitems SubPlayItem1 and SubPlayItem2 and the Virtual_Playable_PID_entries() is provided to the common information area in the playlist PlayList, or the Playable_PID_entries() is provided to the playitem PlayItem only for the main data and the Virtual_Playable_PID - entries() including subtitle reproduction managing information in the common information area is provided in the playlist PlayList.

In relation to above, details of the data structures Playable _PID_entries() and the Virtual_Playable_PID_entries() will be described in detail below with respect to FIGS. 7A-7D.

Principal characteristics of the present invention notable in the first to third embodiments can be summarized as follows,

First, the definition that the main data and the subtitle (supplementary data) form separate individual files permits, not only a case when the supplementary data, such as the subtitle can be recorded on the optical disc, but also to utilize an external file of the optical disc by means of download, and the like in the future.

Second, though the main data and the subtitle (supplementary data) related to each other are managed under the same file information, for an example, the playlist PlayList file, taking a variety of the subtitle (supplementary data) into account, the main data and the subtitle data are separated into a playitem PlayItem and sub-playitem SubPlayItem in recording the reproduction managing information. Therefore, even in a case where the supplementary data related to the main data exists in a variety of forms other than the subtitle, expansive application of this supplemental data becomes easy according to the present invention.

The introduction of the reproduction managing information independent from the main data, such as Playable_PID_entries() and Virtual_Playable_PID_entries(), into the management information for the subtitle (supplementary data) permits more effective reproduction management of the subtitle.

In relation to above, the Playable_PID_entries() and Virtual_Playable_PID_entdes() data structures mentioned in the first to third embodiments as reproduction managing information will be described in detail below.

FIG. 7A illustrates the Playable_PID_entries() data structure for a playitem and a sub-playitem in detail. As shown, the Playable_PID_entries() data structure for both the playitem and the sub-playitem includes a number_of_PID_entries field indicating the number of PID entries in the data structure. For each of the number of PID entries, both data structures provide a ref_to_stream_PID(k) field and an attributes field. The ref_to_stream_PID(k) field provides the PID of the data packets for the data stream. For example, when in the playitem PlayItem, the PID of the main AV stream is provided. When in the sub-playitem Sub-PlayItem, the PID is the PID of a supplemental data stream.

Accordingly, since all the main AV streams managed by playitems are recorded on the MPEG2 TS format, the reproduction management can be made adequately with the ref_to_stream_PID(k) field within the Playable_PID_entcies() included in the playitem information PlayItem().

However, as described before, the supplemental data, such as certain types of subtitle data, may not be recorded in the MPEG2 TS format. As a result, there is no "PID" in the subtitle data, and reproduction of the subtitle with the ref_to_stream_PID(k) field is not possible. Accordingly, as shown in FIG. 7A, the Playable_PID_entries() data structure for the sub-playitem Sub_PlayItem may include a sub-playitem number Sub_PlayItem_num or a relevant clip file name Clip_file_name, or Text_subtitle_file_name field, etc. to identify the appropriate clip file for reproduction of supplemental data,

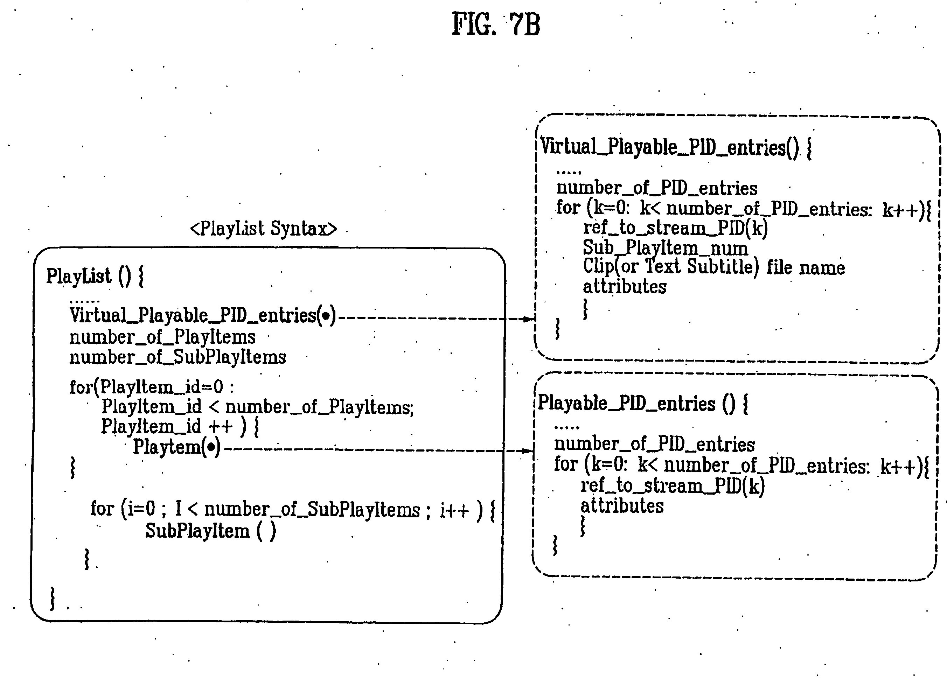

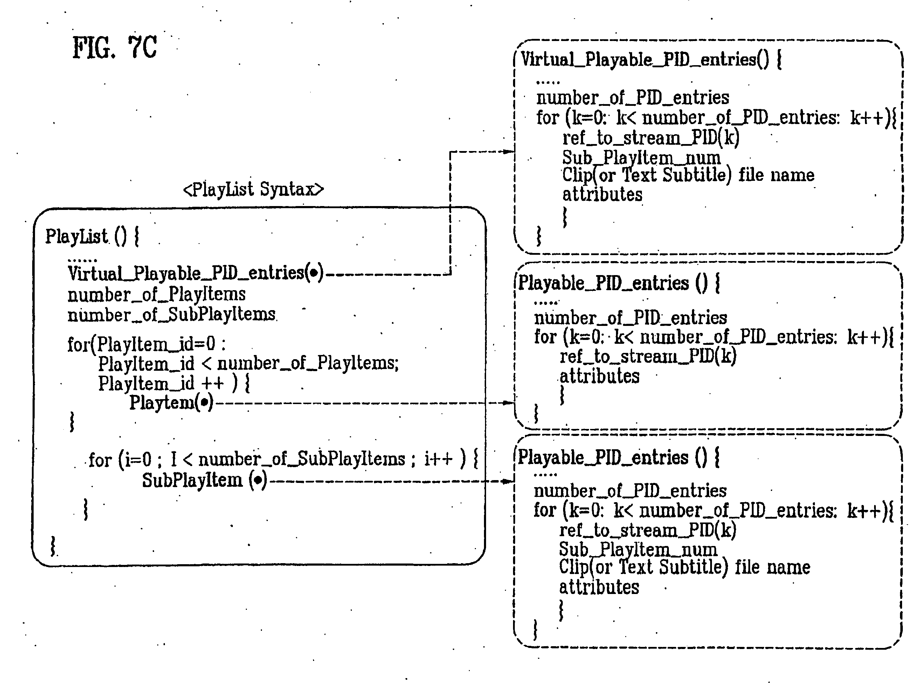

FIGS. 7B and 7C illustrate detailed structures of the Playable_PID_entries() and the Virtual_Playable_PID_entries() data structures. FIG. 7B illustrates an embodiment where the Playable_PID_enties() data structure is provided for the playitem PlayItem of a playlist PlayList, but not for a sub-playitem SubPlayItem. Here, the Playable_PID_entries() data structure for the playitem Playltem is the same as discussed above with respect to FIG. 7A. FIG. 7C illustrates an embodiment where the Playable PID_entries() data structure is provided for both the playitem PlayItem and the sub-playitem SubPlayItem, Here, the Playable_PID_enties() data structures for the playitem PlayItem and the sub-playitem SubPleyItem are the same as discussed above with respect to FIG. 7A.

FIGS. 7B and 7C also illustrates the Virtual_Playable_PID_entries() data structure. This data structure has the same fields as described above with respect to the Playable_PID_entries() data structures for the sub-playitem SubPlayltem. However, the Virtual_Playable_PID_entries() data structure provides the PIDs for the supplemental data streams and the main data stream. Namely, the Virtual_Playable_PID_entries() data structure provides the same information as the Playable_PID_entries() data structure for both the playitem Playltem and the sub-playitem SubPlayItem. As such, the Virtual_Playable_PID_entries() data structure defines a list of the main data stream and each supplemental data stream for selection by a reproducing apparatus during presentation of the playitem PlayItem and the sub-playitem SubPlayItem.

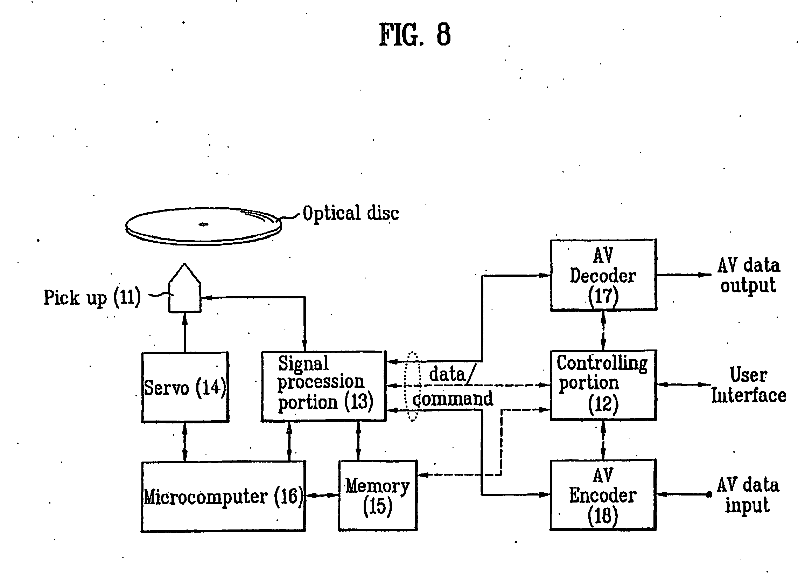

According to this, the optical recording reproduction apparatus (FIG. 8) can reproduce the data streams more efficiently because the playlist file may provide the reproduction managing information Vutual_Playable_ PID_entries() for the main and supplemental data streams. Furthermore, if the Playable_PID_entries() data structures are provided in the playitem information PlayItem() or the sub-playitem information SubPlayItem(), reliability of this reproduction managing information will be enhanced.

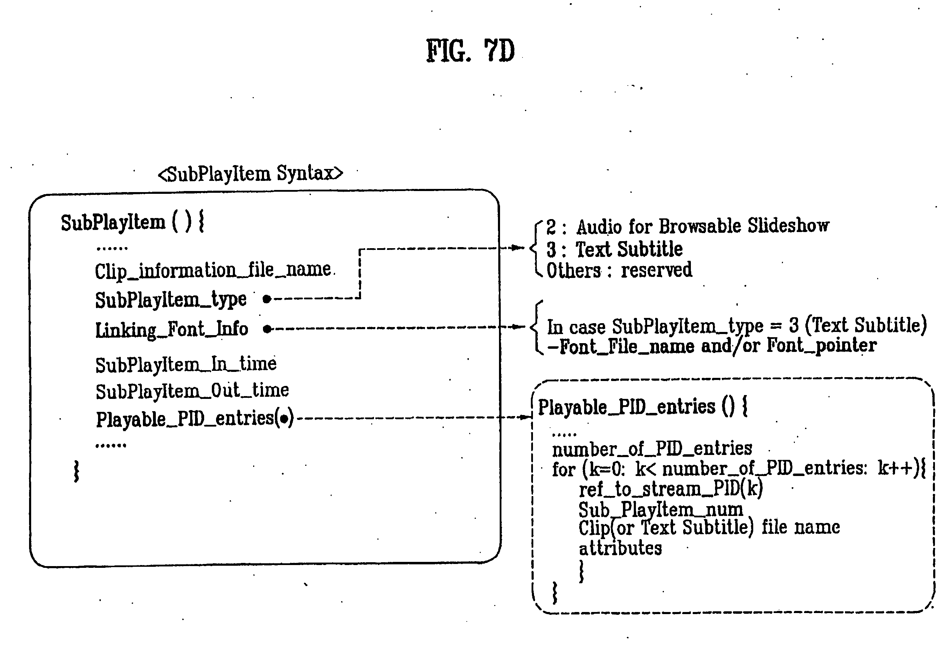

FIG. 7D illustrates a sub-playitem syntax in greater detail. As shown, the sub-playitem information SubPlayItem() has a field for designating the name of the clip information file Clip_information_file_name associated with the stream file to be reproduced, and provides a starting time SubPlayItem_In_time and an end time SubPlayItem_Out_time for reproducing the stream file indicated by the named clip information file. The sub-playitem also includes SubPlayItem_type field for designating a kind of supplemental stream file managed by the sub-playitem. For example, if the supplemental data stream is an audio stream for browsable slide show this field is set to "2". Or if the supplemental data stream is a text subtitle, the type field is set to "3". Therefore, it is apparent that various kinds of supplementary data may be expanded on as the standardization process progresses.

If the stream file managed by the sub-playitem is a subtitle ("SubPlayItem_type = 3"), then the sub-playitem may further include a Linking_Font_Info field. The Linking_Font_Info information, related to the font of the subtitle, provides a Font_File_name, if the font files of possible fonts exist individually, or with a Font_pointer field that indicates a position of a font proper to the subtitle in a font file, if there is only one font file.

FIG. 8 is a detailed block diagram of an optical recording and reproducing apparatus according to the present invention. As shown, the apparatus includes a pickup unit 11 reading out management information and data recorded in an optical disk, a servo 14 controlling the operation of the pickup unit 11, a signal processing unit 13 restoring a playback signal received from the pickup unit 11 into a wanted signal value or modulating a signal to be recorded in the optical disk, a memory 15 temporarily storing the management information such as the sound information and sound data as discussed above, and a microcomputer 16 controlling the operation of the servo 14, the signal processing unit 13 and the memory 15. The above discussed elements of the optical recording and reproducing apparatus may be called a recording and reproducing portion.

In relation to above, in the present invention, the memory 15 represents various storage means (RAM, buffer, and the like) that may exist in the optical recording and reproduction apparatus, and it is apparent that the memory 15 may be replaced with a plurality of different storage means.

An AV decoder 17 decodes output data according to the control of the control unit 12 to provide the decoded data to a user. In order to perform a function of recording a signal in the optical disk, an AV encoder 18 converts an input signal to a specifically formatted signal such as an MPEG2 transport stream according to the control of the control unit 12, and provides the converted signal to the signal processing unit 13 of the record playback system 20.

The control unit 12, which is an element for controlling operations of the apparatus such as discussed in detail above, controls the record playback system 20 (and more specifically, the elements therein). For example the control unit 12 controls the read out of the sub-playitem information that manages the subtitle in response to a user's order for reproducing a particular subtitle, and reproduces the subtitle according to the subtitle reproduction management information included in the read sub-playitem information. More specifically, the control unit 12 determines if the subtitle is reproducible by using the subtitle reproduction managing information Playable_PID_entries() or Virtual_Playable_PID_entrits() stored on the memory temporarily, reads font of the subtitle if the subtitle is reproducible, and controls reproduction of the subtitle.

While the invention has been disclosed with respect to a limited number of embodiments, those skilled in the art, having the benefit of this disclosure, will appreciate numerous modifications and variations there from. For example, while described with respect to a Blu-ray ROM optical disk in several instances, the present invention is not limited to this standard of optical disk or to optical disks. It is intended that all such modifications and variations fall within the scope of the invention.

### Industrial applicability

The present invention includes a data structure for managing reproduction of data streams recorded thereon. In one embodiment, the recording medium stores a playlist that includes a streams table, a playitem and a sub-playitem. The playitem includes information for managing reproduction of a main data stream of data packets, and the sub-playitem includes information for managing reproduction of at least one supplemental data stream of data packets. The streams table provides a list of packet identifiers in the data packets of the main and supplemental data streams.

It will be apparent to those skilled in the art that various modifications and variations can be made in the present invention. Thus, it is intended that the present invention covers the modifications and variations of this invention provided they come within the scope of the appended claims.

## Claims

1. A method of reproducing data streams, comprising:
reading from a recording medium which stores a supplementary data stream file including a supplementary data stream, a main data stream file including a main data stream, and playlist files and clip information files, where the supplementary data stream file is separate from the main data stream file; and
reading a playlist file including a playitem for managing the main data stream and a subplayitem for managing the supplementary data stream related to the main data stream, the playitem identifying a playing interval in a clip of the main data stream, the subplayitem identifying a playing interval in a clip of the supplementary data stream, where the subplayitem includes a field indicating a clip information file corresponding to the supplementary data stream file; and
reproducing the main data stream and the supplementary data stream by using the playitem and the subplayitem respectively,
wherein the playlist file includes stream entries defining a list of data streams that can be selected by a reproducing apparatus during presentation of the playitem and the subplayitem, the data streams include at least one main data stream and at least one supplementary data stream, the stream entries includes a stream PID field indicating packet identifiers of data packets for the data streams such that the reproducing apparatus selects the main data stream and the supplementary data stream by using their packet identifiers indicated by the stream entries.

2. The method of claim 1, wherein the stream entries further includes an attribute field providing attribute information of the data streams.

3. The method of claim 1, further comprising:
downloading the supplementary data stream file.

4. The method of claim 1, wherein the main data stream is a video data stream and the supplementary data stream is a text subtitle data stream related to the video data stream.

5. The method of claim 1, wherein the supplementary data stream is an audio data stream for a browsable slideshow.

6. The method of claim 1, wherein the supplementary data stream is an interactive graphics menu data stream.

7. The method of claim 1, wherein the stream entries are included in the playitem.

8. An apparatus for reproducing data streams, comprising:
a pickup(11) configured to read data recorded on a recording medium, the recording medium stores a supplementary data stream file including a supplementary data stream, a main data stream file including a data stream, and playlist files and clip information files, where the supplementary data stream file is separate from the main data stream file; and
a controller(16) configured to:
control the pickup(11) to read a playlist file including a playitem for managing the main data stream and a subplayitem for managing the supplementary data stream, the playitem identifying a playing interval in a clip of the main data stream, the subplayitem identifying a playing interval in a clip of the supplementary data stream, where the subplayitem includes a field indicating a clip information file corresponding to the supplementary data stream file, and
control the pickup(11) to reproduce the main data stream and the supplementary data stream defined in the stream entries according to said playitem and subplayitem,
wherein the playlist file includes stream entries defining a list of data streams that can be selected during presentation of the playitem and the subplayitem, the data streams include at least one main data stream and at least one supplementary data stream, the stream entries includes a stream PID field indicating packet identifiers of data packets for the data streams, the controller(16) selects the main data stream and the supplementary data stream by using their packet identifiers indicated by the stream entries.

9. The apparatus of claim 8, wherein the stream entries further includes an attribute field providing attribute information of the data streams.

10. The apparatus of claim 8, further comprising:
a storage unit configured to store the supplementary data stream file from an external source.

11. The apparatus of claim 8, wherein the main data stream is a video data stream and the supplementary data stream is a text subtitle data stream related to the video data stream.

12. The apparatus of claim 8, wherein the supplementary data stream is an audio data stream for a browsable slideshow.

13. The apparatus of claim 8, wherein the supplementary data stream is an interactive graphics menu data stream.

## Patentansprüche

1. Verfahren zum Wiedergeben von Datenströmen, mit den Schritten:
Lesen von Daten von einem Aufzeichnungsmedium, auf dem eine Zusatzdatenstromdatei, die einen Zusatzdatenstrom aufweist, eine Hauptdatenstromdatei, die einen Hauptdatenstrom aufweist, und Wiedergabelistendateien und Clipinformationsdateien gespeichert sind, wobei die Zusatzdatenstromdatei von der Hauptdatenstromdatei getrennt ist; und
Lesen einer Wiedergabelistendatei, die ein Wiedergabeelement zum Managen des Hauptdatenstroms und ein Unter-Wiedergabeelement zum Managen des mit dem Hauptdatenstrom in Beziehung stehenden Zusatzdatenstroms aufweist, wobei das Wiedergabeelement ein Wiedergabeintervall in einem Clip des Hauptdatenstroms identifiziert und das Unter-Wiedergabeelement ein Wiedergabeintervall in einem Clip des Zusatzdatenstroms identifiziert, wobei das Unter-Wiedergabeelement ein Feld aufweist, das eine der Zusatzdatenstromdatei entsprechende Clipinformationsdatei anzeigt; und
Wiedergeben des Hauptdatenstroms und des Zusatzdatenstroms unter Verwendung des Wiedergabeelements bzw. des Unter-Wiedergabeelements,
wobei die Wiedergabelistendatei Stromeinträge aufweist, die eine Liste von Datenströmen definieren, die durch ein Wiedergabegerät während der Darstellung des Wiedergabeelements und des Unter-Wiedergabeelements ausgewählt werden können, wobei die Datenströme mindestens einen Hauptdatenstrom und mindestens einen Zusatzdatenstrom aufweisen, wobei die Stromeinträge ein Strom-PID-Feld aufweisen, das Paketkennungen von Datenpaketen für die Datenströme anzeigt, so dass das Wiedergabegerät den Hauptdatenstrom und den Zusatzdatenstrom unter Verwendung ihrer durch die Stromeinträge angezeigten Paketkennungen auswählt.

2. Verfahren nach Anspruch 1, wobei die Stromeinträge ferner ein Attributfeld zum Bereitstellen von Attributinformation der Datenströme aufweisen.

3. Verfahren nach Anspruch 1, ferner mit dem Schritt zum Herunterladen der Zusatzdatenstromdatei.

4. Verfahren nach Anspruch 1, wobei der Hauptdatenstrom ein Videodatenstrom und der Zusatzdatenstrom ein mit dem Videodatenstrom in Beziehung stehender Textuntertiteldatenstrom ist.

5. Verfahren nach Anspruch 1, wobei der Zusatzdatenstrom ein Audiodatenstrom für eine durchblätterbare Diaschau ist.

6. Verfahren nach Anspruch 1, wobei der Zusatzdatenstrom ein interaktiver Grafikmenüdatenstrom ist.

7. Verfahren nach Anspruch 1, wobei die Stromeinträge im Wiedergabeelement enthalten sind.

8. Vorrichtung zum Wiedergeben von Datenströmen, mit:
einem Abtaster (11), der dafür konfiguriert ist, auf einem Aufzeichnungsmedium aufgezeichnete Daten zu lesen, wobei auf dem Aufzeichnungsmedium eine Zusatzdatenstromdatei, die einen Zusatzdatenstrom aufweist, eine Hauptdatenstromdatei, die einen Hauptdatenstrom aufweist, und Wiedergabelistendateien und Clipinformationsdateien gespeichert sind, wobei die Zusatzdatenstromdatei von der Hauptdatenstromdatei getrennt ist; und
einem Controller (16), der dafür konfiguriert ist:
den Abtaster (11) zu steuern, um eine Wiedergabelistendatei zu lesen, die ein Wiedergabeelement zum Managen des Hauptdatenstroms und ein Unter-Wiedergabeelement zum Managen des Zusatzdatenstroms aufweist, wobei das Wiedergabeelement ein Wiedergabeintervall in einem Clip des Hauptdatenstroms identifiziert und das Unter-Wiedergabeelement ein Wiedergabeintervall in einem Clip des Zusatzdatenstroms identifiziert, wobei das Unter-Wiedergabeelement ein Feld aufweist, das eine der Zusatzdatenstromdatei entsprechende Clipinformationsdatei anzeigt; und
Steuern des Abtasters (11) zum Wiedergeben des Hauptdatenstroms und des Zusatzdatenstroms, die in den Stromeinträgen definiert sind, gemäß dem Wiedergabeelement und dem Unter-Wiedergabeelement,
wobei die Wiedergabelistendatei Stromeinträge aufweist, die eine Liste von Datenströmen definieren, die während der Darstellung des Wiedergabeelements und des Unter-Wiedergabeelements ausgewählt werden können, wobei die Datenströme mindestens einen Hauptdatenstrom und mindestens einen Zusatzdatenstrom aufweisen, wobei die Stromeinträge ein Strom-PID-Feld aufweisen, das Paketkennungen von Datenpaketen für die Datenströme anzeigt, wobei der Controller (16) den Hauptdatenstrom und den Zusatzdatenstrom unter Verwendung ihrer durch die Stromeinträge angezeigten Paketkennungen auswählt.

9. Vorrichtung nach Anspruch 8, wobei die Stromeinträge ferner ein Attributfeld zum Bereitstellen von Attributinformation der Datenströme aufweisen.

10. Vorrichtung nach Anspruch 8, ferner mit einer Speichereinheit, die dafür konfiguriert ist, die Zusatzdatenstromdatei von einer externen Quelle zu speichern.

11. Vorrichtung nach Anspruch 8, wobei der Hauptdatenstrom ein Videodatenstrom und der Zusatzdatenstrom ein mit dem Videodatenstrom in Beziehung stehender Textuntertiteldatenstrom ist.

12. Vorrichtung nach Anspruch 8, wobei der Zusatzdatenstrom ein Audiodatenstrom für eine durchblätterbare Diaschau ist.

13. Vorrichtung nach Anspruch 8, wobei der Zusatzdatenstrom ein interaktiver Grafikmenüdatenstrom ist.

## Revendications

1. Procédé pour reproduire des flux de données comprenant :
la lecture à partir d'un support d'enregistrement qui stocke un fichier de flux de données supplémentaires contenant un flux de données supplémentaires, un fichier de flux de données principales contenant le flux de données principales, et des fichiers de liste de reproduction et des fichiers d'informations de clip, dans lequel le fichier de flux de données supplémentaires est séparé du fichier de flux de données principales ; et
la lecture d'un fichier de liste de reproduction comprenant un article de reproduction pour gérer le flux de données principales et un sous-article de reproduction pour gérer le flux de données supplémentaires relatif au flux de données principales, l'article de reproduction identifiant un intervalle de reproduction dans un clip du flux de données principales, le sous-article de reproduction identifiant un intervalle de reproduction dans un clip du flux de données supplémentaires, dans lequel le sous-article de reproduction comprend un champ indiquant un fichier d'informations de clip correspondant au fichier de flux de données supplémentaires ; et
la reproduction du flux de données principales et du flux de données supplémentaires en utilisant respectivement l'article de reproduction et le sous-article de reproduction, dans lequel le fichier de liste de reproduction comprend des entrées de flux définissant une liste de flux de données qui peuvent être sélectionnés par un dispositif de reproduction durant la présentation de l'article de reproduction et du sous-article de reproduction, les flux de données comprennent au moins un flux de données principales et au moins un flux de données supplémentaires, les entrées de flux comprennent un champ PID de flux indiquant des identificateurs de paquet de paquets de données pour les flux de données de manière que le dispositif de reproduction sélectionne le flux de données principales et le flux de données supplémentaires en utilisant leurs identificateurs de paquet indiqués par les entrées de flux.

2. Procédé selon la revendication 1, dans lequel les entrées de flux comprennent en outre un champ d'attribut fournissant des informations d'attribut des flux de données.

3. Procédé selon la revendication 1, comprenant en outre :
le téléchargement du fichier de flux de données supplémentaires.

4. Procédé selon la revendication 1, dans lequel le flux de données principales est un flux de données vidéo et le flux de données supplémentaires est un flux de données de sous-titrage relatif au flux de données vidéo.

5. Procédé selon la revendication 1, dans lequel le flux de données supplémentaires est un flux de données audio pour un diaporama navigable.

6. Procédé selon la revendication 1, dans lequel le flux de données supplémentaires est un flux de données de menus graphiques interactifs.

7. Procédé selon la revendication 1, dans lequel les entrées de flux sont incluses dans l'article de reproduction.

8. Dispositif pour reproduire des flux de données comprenant :
un lecteur (11) configuré pour lire des données enregistrées sur un support d'enregistrement, le support d'enregistrement stocke un fichier de flux de données supplémentaires contenant un flux de données supplémentaires, un fichier de flux de données principales contenant un flux de données principales, et des fichiers de liste de reproduction et des fichiers d'informations de clip, dans lequel le fichier de flux de données supplémentaires est séparé du fichier de flux de données principales ; et
un contrôleur (16) configuré pour :
commander le lecteur (11) pour lire un fichier de liste de reproduction comprenant un article de reproduction pour gérer le flux de données principales et un sous-article de reproduction pour gérer le flux de données supplémentaires, l'article de reproduction identifiant un intervalle de reproduction dans un clip du flux de données principales, le sous-article de reproduction identifiant un intervalle de reproduction dans un clip du flux de données supplémentaires, dans lequel le sous-article de reproduction comprend un champ indiquant un fichier d'informations de clip correspondant au fichier de flux de données supplémentaires ; et
commander le lecteur (11) pour reproduire le flux de données principales et le flux de données supplémentaires définis dans les entrées de flux en fonction de l'article de reproduction et du sous-article de reproduction,
dans lequel le fichier de liste de reproduction comprend des entrées de flux définissant une liste de flux de données qui peuvent être sélectionnés durant la présentation de l'article de reproduction et du sous-article de reproduction, les flux de données comprennent au moins un flux de données principales et au moins un flux de données supplémentaires, les entrées de flux comprennent un champ PID de flux indiquant des identificateurs de paquet de paquets de données pour les flux de données, le contrôleur (16) sélectionne le flux de données principales et le flux de données supplémentaires en utilisant leurs identificateurs de paquet indiqués par les entrées de flux.

9. Dispositif selon la revendication 8, dans lequel les entrées de flux comprennent en outre un champ d'attribut fournissant des informations d'attribut des flux de données.

10. Dispositif selon la revendication 8, comprenant en outre :
une unité de mémoire configurée pour stocker le fichier de flux de données supplémentaires à partir d'une source externe.

11. Dispositif selon la revendication 8, dans lequel le flux de données principales est un flux de données vidéo et le flux de données supplémentaires est un flux de données de sous-titrage relatif au flux de données vidéo.

12. Dispositif selon la revendication 8, dans lequel le flux de données supplémentaires est un flux de données audio pour un diaporama navigable.

13. Dispositif selon la revendication 8, dans lequel le flux de données supplémentaires est un flux de données de menus graphiques interactifs.
